# EUROPÄISCHE PATENTSCHRIFT

(11) **EP 2 960 515 B1**
(45) Veröffentlichungstag und Bekanntmachung des Hinweises auf die Patenterteilung: **31.10.2018**
(21) Anmeldenummer: 14173705.6
(22) Anmeldetag: 24.06.2014
(51) Int. Cl.: F04D 13/02, H01F 13/00, H02K 49/10

(54) **Magnetische Kupplung**
Magnetic coupling
Couplage magnétique

(43) Veröffentlichungstag der Anmeldung: 30.12.2015
(73) Patentinhaber: Grundfos Holding A/S, 8850 Bjerringbro (DK)
(72) Erfinder: Bendixen, Flemming Buus, 9500 Hobro (DK); Kjeldsteen, Peter, 9620 Ålestrup (DK); Søgaard, Allan Ivo, 9500 Hobro (DK)
(74) Vertreter: Patentanwälte Vollmann & Hemmer

(56) Entgegenhaltungen:
- US-A- 3 678 436
- US-A- 5 915 931
- US-A1- 2002 180 425
- US-A1- 2011 241 469
- ZHU Z Q ET AL: "Halbach permanent magnet machines and applications: a review", IEE PROCEEDINGS: ELECTRIC POWER APPLICATIONS, INSTITUTION OF ELECTRICAL ENGINEERS, GB, Bd. 148, Nr. 4, 6. Juli 2001 (2001-07-06), Seiten 299-308, XP006016918, ISSN: 1350-2352, DOI: 10.1049/IP-EPA:20010479

## Beschreibung

Die Erfindung betrifft eine magnetische Kupplung mit den im Oberbegriff des Anspruchs 1 angegebenen Merkmalen.

Magnetische Kupplungen der in Rede stehenden Art zählen zum Stand der Technik und werden beispielsweise bei Kreiselpumpen eingesetzt, um die Motorwelle mit der Pumpenwelle antriebszuverbinden, gleichzeitig diese jedoch mechanisch voneinander zu trennen. Insbesondere bei Pumpen, die zum Fördern von aggressiven Medien vorgesehen sind, ist eine solche magnetische Kupplung vorgesehen, wobei in dem Spalt zwischen dem inneren und dem äußeren Rotor ein Spaltrohr angeordnet ist, welches Teil eines Spaltrohrtopfes bildet, der die Pumpe hermetisch nach außen und somit insbesondere auch zum Motor hin abschließt.

Aus EP 2 056 432 A1 zählt eine magnetische Kupplung zum Stand der Technik, in der quaderförmige Permanentmagnete verbaut sind, die einerseits in einem inneren Rotor und andererseits in einem äußeren Rotor angeordnet sind. Die Herstellung solcher Rotoren ist vergleichsweise aufwändig, da die Permanentmagnete zuverlässig in den jeweiligen Rotoren festzulegen sind. Darüber hinaus weist die bekannte magnetische Kupplung eine radiale Baugröße auf, die durch die Permanentmagnete einerseits, die mechanische Konstruktion andererseits, aber auch durch das erforderliche weichmagnetische "Backing" bedingt ist, welches als Joch dient und erforderlich ist, um die magnetischen Kreise zu schließen.

Insoweit günstiger ist die aus US 6,841,910 B2 bekannte magnetische Kupplung, bei der die Magnete als Halbach-Array angeordnet sind, also eine Konfiguration aufweisen, die ein solches "Backing" überflüssig macht und magnetisch hoch effektiv ist. Die dort beschriebene Kupplung ist allerdings extrem bauaufwändig, da zum einen die Permanentmagnete eine spezielle und an den jeweiligen Durchmesser der Rotoren angepasste Form aufweisen, die zum einen aufwändig in der Herstellung und zum anderen noch aufwändiger in der Montage sind.

Im Übrigen stellt sich bei den Permanentmagneten der Kupplungen der vorgenannten Art das Problem der Wiederverwertung. Diese müssen im Recyclingfall sorgfältig von den Tragkörpern getrennt werden und können erst dann aufwändig recycelt werden.

Insoweit günstiger sind die aus ZHU Z Q ET AL:"Halbach permanent magnet machines and applications: a review", IEE PROCEEDINGS: ELECTRIC POWER APPLICATIONS, INSTITUTION OF ELECTRICAL ENGI-NEERS, GB, Bd. 148, Nr. 4, 6. Juli 2001 (2001-07-06) bekannten Magnetanordnungen, bei denen ein Ringmagnet aus geschmolzenem oder gesintertem magnetisierbaren Pulver gebildet ist, welches in der gewünschten Weise nach Herstellung des Rings magnetisiert worden ist. Eine solche Ausgestaltung eines Elektromotors oder einer magnetischen Kupplung ist aus US 2011/0241469 A1 bekannt.

Ausgehend vom letztgenannten Stand der Technik liegt der vorliegenden Erfindung die Aufgabe zugrunde, eine magnetische Kupplung der vorgenannten Art zu schaffen, die zum einen kostengünstig herstellbar ist und die zum anderen bei vergleichsweise kleiner Baugröße hohe Momente übertragen kann.

Diese Aufgabe wird durch eine magnetische Kupplung mit den in Anspruch 1 angegebenen Merkmalen gelöst. Vorteilhafte Ausgestaltungen der Erfindung sind in den Unteransprüchen, der nachfolgenden Beschreibung und den Zeichnungen angegeben. Hierbei können die in den Unteransprüchen und der Beschreibung angegebenen Merkmale jeweils für sich aber auch in geeigneter Kombination die erfindungsgemäße Lösung gemäß Anspruch 1 weiter ausgestalten.

Die magnetische Kupplung gemäß der Erfindung weist einen inneren Rotor und einen diesen zumindest teilweise umgebenden äußeren Rotor auf, die jeweils magnetisches Material beinhalten und die durch magnetische Kräfte miteinander gekuppelt sind. Dabei beinhaltet der innere Rotor oder der äußere Rotor oder beide Rotoren pulverförmiges magnetisierbares Material, welches von der Seite, welche dem anderen Rotor gegenüberliegt, in mehreren über den Umfang verteilten Stellen magnetisiert ist.

Grundgedanke ist es, einen Rotor der Kupplung nicht, wie beim Stand der Technik bekannt, aus Permanentmagneten aufzubauen, sondern mit pulverförmigem, magnetisierbarem Material zu versehen, welches dann nach Einbau in den Rotor von der Seite aus magnetisiert wird, an welcher später der damit magnetisch gekuppelte andere Rotor gegenüberliegt und zwar an mehreren über den Umfang verteilten Stellen, je nach Anzahl der Magnetpole. Nach der Erfindung ist es möglich, komplexe Magnetisierungsmuster in dem magnetisierbaren Material zu erzeugen, Muster die mit vorgefertigten Magneten nur schwer erreichbar sind.

Grundsätzlich kann das pulverförmige, magnetisierbare Material, welches zum Aufbau des mindestens einen Rotors zum Einsatz kommt, durch Hilfsstoffe behandelt sein, sei es, dass diese den Zusammenhalt fördern, die Korrosionsbeständigkeit erhöhen oder eine andere Eigenschaft verbessern. Besonders vorteilhaft ist es jedoch, wenn das pulverförmige, magnetisierbare Material als solches, also ohne solche Zusatzstoffe, Verwendung findet, da dann bezogen auf das zur Verfügung stehende Volumen eine maximale Dichte von magnetisierbarem Material einsetzbar ist, welches nach der Magnetisierung vergleichsweise große magnetische Kräfte erzeugt. Ein besonderer Vorteil eines solchen reinen, nicht mit Zusatzstoffen vermengten pulverförmigen, magnetisierbaren Materials ist es, dass es später in einfacher Form recycelt werden kann, indem es auf eine Temperatur erhitzt wird, bei welcher die Magnetisierung verloren geht, wonach es dann ohne weitere Aufbereitung wiederverwendet werden kann.

Bei der magnetischen Kupplung gemäß der Erfindung handelt es sich vorzugsweise um eine Radialkupplung. Als magnetisierbares Material kann sowohl isotropisches als auch anisotropisches Material Verwendung finden.

Besonders vorteilhaft ist die Magnetisierung derart, dass sich im gekuppelten Zustand in Ebenen quer zur Längsmittel- und Rotationsachse der Kupplung eine wellenlinienförmige, vorzugsweise sinusförmige Verteilung der magnetischen Flussdichte zwischen den Rotoren einstellt. Eine sinusförmige Verteilung der magnetischen Flussdichte zwischen den Rotoren ist optimal, Abweichungen sind jedoch in Grenzen tolerierbar, sodass auch eine wie auch immer geartete wellenlinienförmige Verteilung ausreichend sein kann, um das erforderliche Moment zu übertragen. Mit der Erfindung kann eine geringe Verzerrung der Sinus-Form erreicht werden. So liegt das THD (Total Harmonic Distortion) im Bereich von 3,5 %.

Vorteilhaft erfolgt die Magnetisierung über den Umfang des Rotors im gleichen Winkelabstand bezogen auf die gemeinsame Längsmittel- und Rotationsachse der Kupplung verteilt. Dabei weisen die beiden Rotoren stets die gleiche Polzahl auf, beispielweise acht oder zwölf über den Umfang gleichmäßig verteilte magnetische Pole.

Da das magnetische Material häufig korrosionsanfällig ist, ist es insbesondere beim Einsatz der magnetischen Kupplung in einer Pumpe aber auch bei anderen Anwendungen gemäß der Erfindung vorgesehen, dass dieses in einem hermetisch abgeschlossen Behältnis angeordnet ist. Vorteilhaft weist daher der Rotor ein solches Behältnis auf, in dem das magnetisierbare und nach der Magnetisierung magnetische Material angeordnet ist. Dabei ist das Material vorteilhaft in verdichteter Form angeordnet, um zum einen die Materialdichte und damit auch die magnetischen Kräfte zu erhöhen, zum anderen damit dieses im Rotor lagebeständig ist, d. h. durch die Momentenbelastung zwischen den Rotoren nicht bewegt wird. Hierzu können gegebenenfalls unterstützende Maßnahmen beim Material selbst aber auch rotorseitig vorgesehen sein, wie beispielsweise Vorsprünge, Mitnehmer, Speichen oder dergleichen, welche in das magnetische Material eingreifen und einen gewissen Formschluss erzeugen.

Ein solches Behältnis innerhalb eines Rotors kann alternativ gemäß der Erfindung durch einen zumindest einseitig offenen Ringraum gebildet sein, in den das magnetisierbare Material in verdichteter Form eingefüllt wird, um dann nachfolgend magnetisiert zu werden. Dabei ist das pulverförmige, magnetische Material in einem offenen Raum vorteilhaft mit einer schützenden Beschichtung versehen sowie mit einem Haftmittel. Das Haftmittel sorgt dafür, dass das pulverförmige, magnetische Material in seiner Stellung im Raum verbleibt, auch wenn der Ringraum zumindest einseitig offen ausgebildet ist. Die schützende Beschichtung sorgt dafür, dass das magnetische Material nicht korrodiert, d. h., es ist also geschützt vor Umgebungseinflüssen.

Gemäß der Erfindung weist zumindest das Behältnis oder der Ringraum des äußeren Rotors eine hohlzylindrische Form auf, wobei das Verhältnis vom Abstand Xₐ benachbarter magnetischer Pole am Innendurchmesser des äußeren Rotors zur Dicke Tₐ des magnetischen Materials im äußeren Rotor zwischen 2 und 3 beträgt. Das Verhältnis hat sich als besonders günstig erwiesen und stellt ein Optimum zwischen Materialeinsatz und Effizienz dar, es sorgt zudem dafür, dass bei der eingangs beschriebenen Magnetisierung der magnetische Fluss im Wesentlichen innerhalb des Ringraumes verbleibt bzw. zu dem in magnetischer Wirkverbindung stehenden Rotor fließt. Das vorgenannte Größenverhältnis ist alternativ oder zusätzlich für den inneren Rotor gemäß der Erfindung vorgesehen, wobei dann nämlich dort ein hohlzylindrisches Behältnis oder ein entsprechender Ringraum vorgesehen ist und der Abstand Xᵢ benachbarter magnetischer Pole am Außendurchmesser des inneren Rotors zur Dicke Tᵢ des magnetischen Materials im inneren Rotor zwischen 2 und 3 beträgt. Der innere Rotor muss nicht grundsätzlich als Ringkörper ausgebildet sein, dieser kann auch zylindrisch oder mit einem Kern aus Vollmaterial gebildet sein. Es genügt allerdings dort magnetisches Material in dem vorgenannten Größenverhältnis anzuordnen. Ungeachtet ob es sich um den inneren oder äußeren Rotor handelt, vorteilhaft ist das Verhältnis von Abstand Xₐ bzw. Xᵢ zur Dicke Tₐ bzw. Tᵢ in einer Größenordnung zwischen 2,2 bis 2,8, vorzugsweise etwa 2,5.

Wenn, was zweckmäßig ist, das magnetisierbare und nach dem Magnetisieren magnetische Material im Ringraum des Rotor hermetisch abgeschlossen und die äußere Wand des Rotors so ausgelegt ist, dass die Permeabilität der das magnetische Material umgebenden Wand zwischen 1 und 2 beträgt, dann wird der magnetische Fluss im Wesentlichen innerhalb des Rotors gehalten, ein "Backing" bzw. Joch für den magnetischen Rückfluss ist nicht erforderlich, was fertigungstechnisch und hinsichtlich der Baugröße vorteilhaft ist.

Gemäß einer vorteilhaften Weiterbildung der Erfindung ist es zweckmäßig, die magnetischen Pole im inneren und im äußeren Rotor in Längsrichtung gesehen schräg zu stellen, und zwar in einem Winkel zwischen 10° und 60°, vorzugsweise 15° bezogen auf eine Parallele zur Längsmittel- und Rotationsachse, wobei die Schrägstellung unter Richtungswechsel erfolgen kann oder auch längs einer Kurve, wobei es Sinn und Zweck der Gestaltung (Schrägstellung oder Kurvenverlauf) ist, dass die Länge des Pols gegenüber der geometrischen Höhe des Rotors vergrößert wird. Hierdurch können die Spaltrohrverluste minimiert werden. Insbesondere wird ein V-förmiger Verlauf der Pole bevorzugt, d. h. es ergibt sich ein Zickzack-Muster über die Höhe des jeweiligen Rotors.

Vorteilhaft besteht das pulverförmige magnetisierbare Material, das für den inneren und/oder äußeren Rotor eingesetzt wird, zu 0 % bis 50 % aus weichmagnetischen Stoffen und zu 50 % bis 100 % aus hartmagnetischen Stoffen. Die Wahl der Zusammensetzung wird nach wirtschaftlichen und technischen Gesichtspunkten erfolgen, d. h. es wird so viel wie möglich von dem kostengünstigeren Material verwendet, wohingegen von dem teureren Material so viel zugesetzt wird, wie dies für die technische Funktion, d. h. die Übertragung des Drehmoments, erforderlich ist.

Gemäß einer vorteilhaften Ausgestaltung der Erfindung kann einer der Rotoren mit Permanentmagneten ausgestattet sein, wie dies zum Stand der Technik zählt, wobei diese dann allerdings besonders vorteilhaft in einer Halbach-Array Konfiguration angeordnet sind, um eine hohe magnetische Effizienz sicherzustellen.

Fertigungstechnisch besonders vorteilhaft ist es, wenn das magnetisierbare bzw. später magnetische Material im Rotor durch einen oder mehrere vorzugsweise ringförmig und aus pulverförmigem Material vorgeformte Formkörper gebildet ist. Diese Formkörper sind vorteilhaft ohne Haftmittel nur durch Pressen des Pulvers gebildet und weisen einen gewissen inneren Zusammenhalt auf, der zumindest dazu ausreicht, um diese maschinell zu handhaben und im Rotor anzuordnen bzw. im Behältnis des Rotors anzuordnen. Diese Formkörper können gegebenenfalls Formschlussmittel aufweisen, welche mit entsprechend ausgebildeten Formschlussmitteln rotorseitig zusammenwirken, um so sicherzustellen, dass eine Drehsicherung des jeweiligen Formkörpers innerhalb des Rotors vorhanden ist. Das Vorformen erfolgt vorteilhaft durch Pressen, was zudem den Vorteil hat, dass die Materialdichte erhöht wird, wodurch auch die späteren magnetischen Eigenschaften verbessert werden. Gegebenenfalls kann das pulverförmige Material durch geeignetes Haftmittel zu einem stabilen und handhabbaren Formkörper ausgebildet werden.

Das Verfahren zum Herstellen eines Rotors für eine magnetische Kupplung gemäß der Erfindung zeichnet sich dadurch aus, dass das pulverförmige magnetisierbare Material zunächst im oder am Rotor angeordnet wird, wonach eine Magnetisierung von der kupplungsaktiven Seite des Rotors aus erfolgt, und zwar entsprechend der gewünschten Polzahl im gleichen Abstand über den Umfang der Seite verteilt.

Ein solches Verfahren kann automatisiert erfolgen. Das magnetisierbare Material ist einfach zu handhaben, da es noch nicht magnetisch ist und somit wie Schüttgut förderbar ist. Durch Verpressen können gegebenenfalls Formlinge gebildet werden, die mechanisch handhabbar sind. Dabei ist gemäß einer Weiterbildung vorgesehen, dass das magnetisierbare Material in den Rotor eingebracht, d. h. in einen eigens dafür vorgesehenen Raum im Rotor eingebracht wird, beispielsweise einen Ringraum, und dort verdichtet wird, wonach der Rotorraum durch Schweißen und/oder Umformung einer Rotorwand verschlossen wird. Dabei kann das magnetisierbare Material entweder pulverförmig eingebracht oder schon vorgeformt eingebracht werden. Auch in letzterem Fall ist es vorteilhaft, eine weitere Verdichtung innerhalb des Rotors erfolgen zu lassen. Dabei wird der Rotorraum entweder durch Schweißen hermetisch abgeschlossen oder durch Umformung, also durch Faltung des Randes nach innen, gegebenenfalls mit nachfolgendem Schweißen, verschlossen. Das vorgeformte magnetisierbare Material kann sich als ein Ring ungebrochen über 360° erstrecken oder als Teilringe mit einer Erstreckung von z. B. 180° ausgeführt werden.

Der hermetische Verschluss kann statt durch Schweißen auch durch Kleben oder durch Vorsehen geeigneter Dichtmittel zwischen den Fügeelementen hergestellt werden.

Besonders vorteilhaft ist es, wenn das magnetisierbare Material für einen Rotor in zwei oder mehr ringförmige Formkörper vorzugsweise durch Pressen gebracht wird, die nachfolgend in einem Ringraum des Rotors diesen ausfüllend übereinanderliegend angeordnet und vorteilhaft nochmals verdichtet werden, wonach dann der Ringraum hermetisch verschlossen wird.

Grundsätzlich erfolgt die Magnetisierung des inneren Rotors vom Außenumfang her und die des äußeren Rotors vom Innenumfang her. Dies kann schrittweise erfolgen, indem ein Pol durch Anlegen eines Elektromagneten erzeugt wird, wonach der jeweilige Rotor um einen vorbestimmten Winkel weitergedreht wird und dies so lange erfolgt, bis alle Pole gleichmäßig verteilt um die Längsmittelachse hergestellt sind. Erstaunlicherweise hat sich allerdings herausgestellt, dass es von besonderem Vorteil ist, wenn alle Pole gleichzeitig hergestellt werden. Das hat den Vorteil, dass die Verzerrung der sinusförmigen Verteilung der magnetischen Flussdichte niedrig gehalten werden kann.

Die Erfindung ist nachfolgend anhand eines in den Zeichnungen dargestellten Ausführungsbeispiels näher erläutert. Es zeigen:
- Fig. 1: in stark vereinfachter Längsschnittdarstellung eine mehrstufige Kreiselpumpe mit Motorstuhl und darin befindlicher magnetischer Kupplung,
- Fig. 2: die Einzelheit B aus Fig. 1 in vergrößerter Darstellung,
- Fig. 3: in stark vereinfachter vergrößerter und perspektivischer Längsschnittdarstellung einen inneren und einen äußeren Rotor,
- Fig. 4: in schematischer Darstellung den äußeren Rotor beim Magnetisieren,
- Fig. 5: die Magnetisierung im innerem und äußeren Rotor sowie die Flussdichteverteilung im Spalt zwischen den Rotoren in einer Ebene quer zur Längsachse,
- Fig. 6: die magnetische Ausrichtung im äußeren Rotor in einer Ebene quer zur Längsachse,
- Fig. 7: die magnetische Ausrichtung im inneren Rotor in einer Ebene quer zur Längsachse,
- Fig. 8: die magnetische Ausrichtung und den magnetischen Fluss in einer magnetischen Kupplung mit quaderförmigen Permanentmagneten nach dem Stand der Technik und
- Fig. 9: die magnetische Ausrichtung und den magnetischen Fluss in einer Kupplung gemäß der Erfindung in einer Ebene quer zur Längsachse.

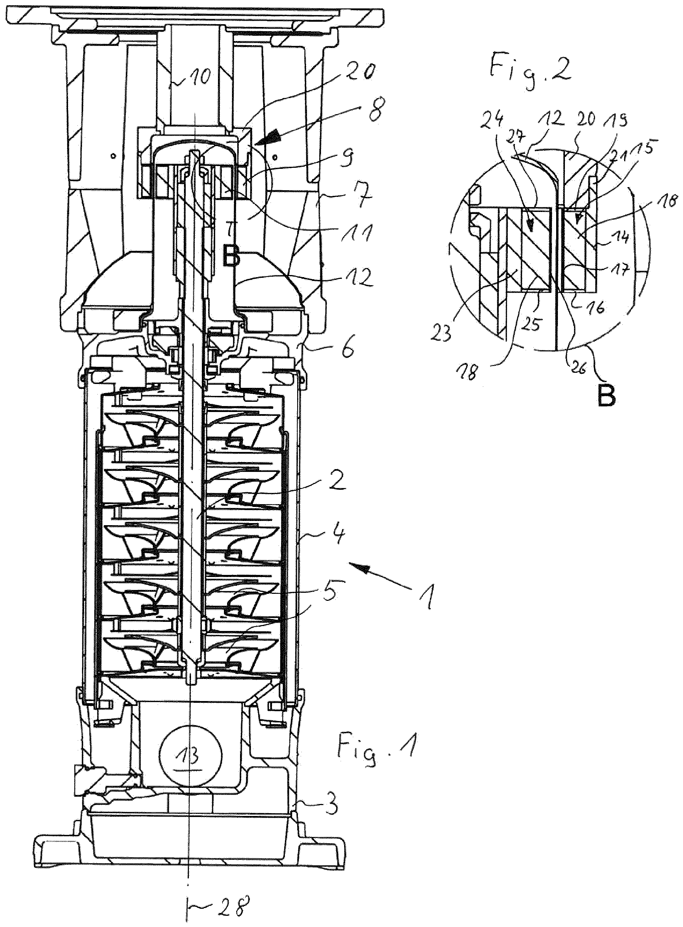

Die in Fig. 1 dargestellte Kreiselpumpe ist eine mehrstufige Kreiselpumpe 1, die in ihrem Aufbau bekannten Kreiselpumpen des Typs Grundfos CR entspricht. Es handelt sich hierbei um eine mit vertikaler Welle 2 betriebene Pumpe mit einem bodenstehenden Fuß 3, an den ein mittlerer, durch einen Mantel 4 nach außen hin abgeschlossenen Abschnitt anschließt, in dem Kreiselräder 5 auf der Welle 2 sitzen. Der einerseits im Fuß 3 aufgenommene Mantel 4 ist andererseits in einem Kopfteil 6 aufgenommen, aus dem das obere Ende der Welle 2 herausgeführt ist. Oberhalb des Kopfteils 6 ist ein sogenannter Motorstuhl 7 angeordnet, der zur Aufnahme eines in Fig. 1 nicht dargestellten Elektromotors zum Antrieb der Pumpe 1 vorgesehen ist.

Im Bereich des Motorstuhls 7 ist eine magnetische Kupplung 8 vorgesehen, die einen äußeren Rotor 9 aufweist, der über eine Aufnahme 10 mit einer Motorwelle verbunden ist, sowie einen inneren Rotor 11 aufweist, der drehfest mit dem oberen Ende der Welle 2 verbunden ist. Zwischen dem äußeren Rotor 9 und dem inneren Rotor 11 ist ein Spaltrohrtopf 12 angeordnet, welcher die Pumpe 1 im Bereich des Kopfteils 6 hermetisch abschließt.

Bei der dargestellten Kreiselpumpe 1 handelt es sich um eine Inlinepumpe. Die über einen Sauganschluss in einen Saugraum 13 im Fuß 3 gelangte Flüssigkeit wird über die übereinanderliegenden Pumpenstufen vom Laufrad zum Leitapparat und von da zur nächsten Stufe gefördert und über einen innerhalb des Mantels 4 gebildeten Ringkanal in den Fuß 3 zurück und dort zu einem Druckanschluss geleitet, wie dies an sich zum Stand der Technik zählt, auf den insoweit verwiesen wird. Die Antriebsverbindung zum Motor erfolgt über die magnetische Kupplung 8, wobei der äußere Rotor 9 drehfest mit der Motorwelle und der innere Rotor 11 drehfest mit der Welle 2 der Kreiselpumpe 1 verbunden ist. Die Momentenübertragung erfolgt ausschließlich magnetisch durch den Spaltrohrtopf 12 hindurch.

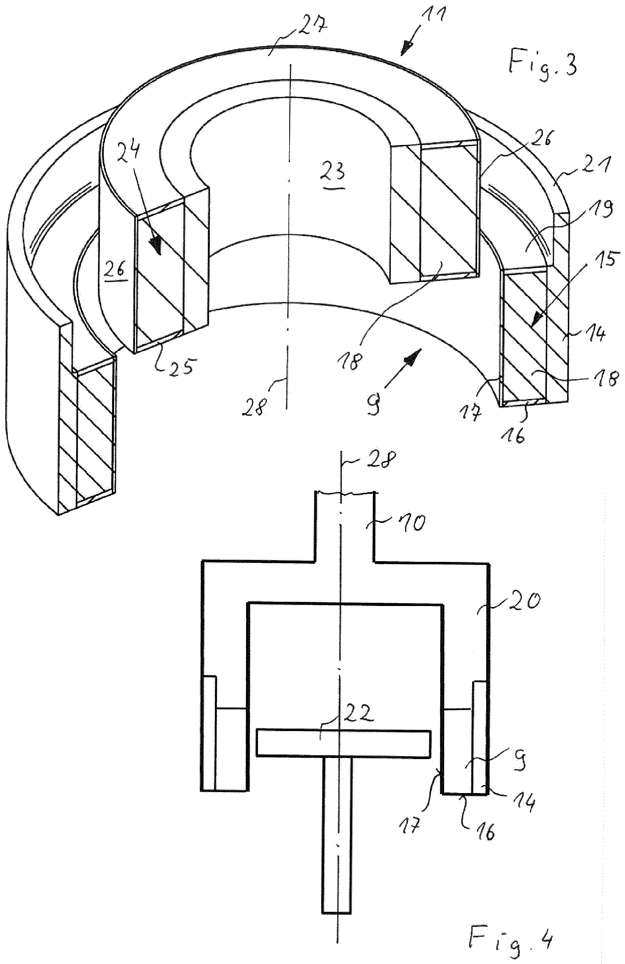

Der äußere Rotor 9 hat eine im Wesentlichen hohlzylindrische Ringform mit einer verstärkten tragenden Außenwand 14, welche einen nach oben offenen Ringraum 15 radial nach außen hin begrenzt. Nach unten ist dieser Ringraum 15 durch eine den Boden des Ringraums 15 bildende Wand 16 begrenzt, die bündig an die Außenwand 14 anschließt. Parallel zur Außenwand 14 erstreckt sich an der Innenseite der Wand 16 eine Innenwand 17 so weit nach oben wie der in den Figuren 2 und 3 deutlich sichtbare verstärkte Teil der Außenwand 14 reicht. Dieser nach oben offene Ringraum 15 ist mit magnetisierbarem, pulverförmigem Material 18 gefüllt, welches in den Ringraum 15 eingefüllt und durch ein Presswerkzeug von oben verdichtet ist. Dabei kann das pulverförmige Material 18 entweder pulverförmig in den Ringraum 15 eingefüllt und schichtweise verdichtet sein oder durch zuvor durch Pressen gebildete (nicht dargestellte) Formkörper, die übereinanderliegend in den Ringraum 15 eingelegt und anschließend nochmals verpresst sind, bestehen.

Dieser Ringraum 15 ist nach dem Befüllen und Verdichten mit pulverförmigem, magnetisierbarem Material 18 durch einen ringförmigen Deckel 19 verschlossen worden, welcher den Ringraum 15 nach oben hin abschließt und umlaufend mit der Innenwand 17 und der Außenwand 14 verschweißt ist, sodass das Material 18 durch das umgebende Material, das hier Edelstahl ist, hermetisch abgeschlossen ist. Die Außenwand 14 weist einen nach oben ragenden kragenförmigen Abschnitt 21 auf, welcher zur Aufnahme eines entsprechend stufenförmig ausgebildeten Drehteils 20 vorgesehen ist, welches Teil der Aufnahme 10 für die Motorwelle bildet. Das Drehteil 20 ist an beiden Seiten umlaufend mit dem äußeren Rotor 9 durch Schweißen verbunden.

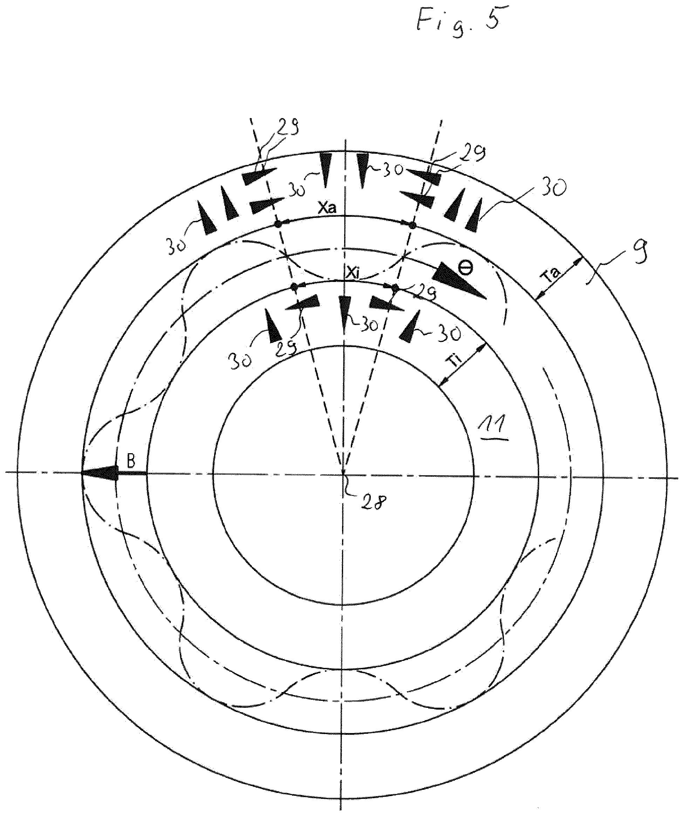

Das so gebildete und in Fig. 4 schematisch dargestellte Rotorbauteil wird dann durch Einfahren eines Kopfes 22 einer Magnetisiervorrichtung von der Innenseite her, also an der Innenwand 17 magnetisiert, und zwar derart, dass im gleichen Winkelabstand über den Umfang verteilt die gewünschte Anzahl von Polen, hier beispielsweise acht Pole erzeugt werden. Der Kopf 22 weist hierzu acht (nicht dargestellte) Magnetisiersonden auf, welche über einen oder mehrere Elektromagneten magnetisch angesteuert sind und die gewünschte Magnetisierung des Materials 18 derart durchführen, dass in Verbindung mit dem weiter unten noch im Einzelnen beschriebenen ebenfalls achtpoligen inneren Rotor 11 in gekuppeltem Zustand eine sinusförmige Verteilung der magnetischen Flussdichte im Spalt zwischen den Rotoren 9 und 11, also im Bereich des Spaltrohrtopfes 12, entsteht, wie dies anhand von Fig. 5 schematisch dargestellt ist.

Der innere Rotor 11 ist in der dargestellten Ausführungsform ähnlich aufgebaut wie der äußere Rotor 9. Er weist eine verstärkte Innenwand 23 auf, die hohlzylindrisch ausgebildet ist und an die sich nach außen hin ein Ringraum 24 anschließt, der an seiner Unterseite durch einen Boden 25 und an seiner Außenseite durch eine umlaufende Außenwand 26 begrenzt ist. Dieser Ringraum 24 ist ebenfalls mit pulverförmigem, magnetisierbarem Material 18 gefüllt, das dort verdichtet ist. Hier kann in analoger Weise zum äußeren Rotor 9 entweder das Material 18 schichtweise eingefüllt und verdichtet oder bevorzugt in vorgepressten Formteilen in Form von Ringen eingelegt werden, die gegebenenfalls in ihrer Gesamtheit noch einmal innerhalb des Ringraums 24 verpresst werden, wonach dieser nach oben hin durch einen ringförmigen Deckel 27 abgeschlossen wird, der an seiner Außenseite umlaufend mit der Außenwand 26 und am Innenumfang umlaufend mit der Innenwand 23 verschweißt ist, sodass der Ringraum 24 mit dem darin befindlichen Material 18 hermetisch abgeschlossen ist. Die Innenwand 23 ist drehfest mit der Welle 2 der Kreiselpumpe 1 verbunden. Das magnetisierbare Material 18 innerhalb des Ringraums 24 ist an der Außenseite, also von der Außenwand 26 aus, magnetisiert, und zwar ebenfalls in acht Polen, die vorzugsweise gleichzeitig magnetisiert sind und einen gleichen Winkelabstand um die Längsmittelachse 28 aufweisen, der 45° beträgt.

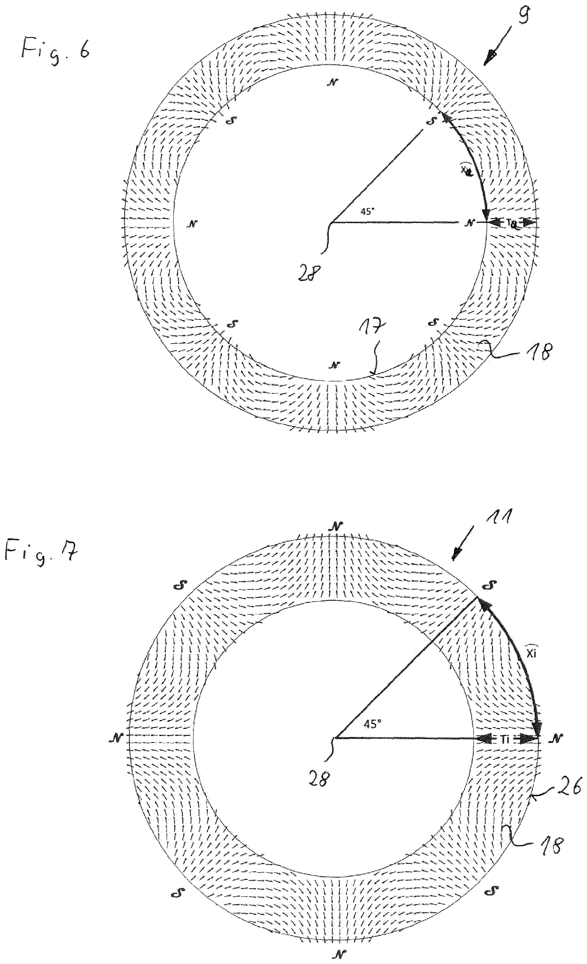

Anhand der Figuren 6 und 7 ist die Magnetisierung des Materials 18 innerhalb des Ringraums 15 bzw. des Ringraums 24 deutlich zu erkennen. Dort ist auch dargestellt, welche Größenverhältnisse zu bevorzugen sind. Figur 6, welche einen Schnitt quer zur Längsachse 18 durch den äußeren Rotor 9 darstellt, verdeutlicht, wie die magnetischen Ausrichtungen der hier beispielhaft dargestellten acht Pole innerhalb des magnetischen Materials 18 gerichtet ist. Der innere Rotor und der äußere Rotor weisen die gleiche Polzahl auf.

Besonders effektiv ist die Anordnung dann, wenn der Abstand Xₐ, also der Abstand benachbarter magnetischer Pole am Innendurchmesser, d. h. an der Innenwand 17 des äußeren Rotors 9 zur Dicke Tₐ des magnetischen Materials 18 im äußeren Rotor 9 zwischen 2 und 3, vorzugsweise 2,5 beträgt. Entsprechend gilt, dass die Dimensionierung des inneren Rotors 11 so gewählt ist, dass das Verhältnis vom Abstand Xᵢ benachbarter magnetischer Pole am Außendurchmesser der Außenwand 26 des inneren Rotors 11 zur Dicke Tᵢ des magnetischen Materials im inneren Rotor 11 zwischen 2 und 3, bevorzugt zwischen 2,2 und 2,8, idealerweise 2,5 beträgt. Falls das Verhältnis kleiner als 2 ist, so hat der Magnet einen ungünstigen Arbeitspunkt, weil das Magnetmaterial schlecht ausgenutzt wird. Ist T zu groß, so wird das Magnetisieren erheblich erschwert. Im Idealfall zwischen 2 und 3 wird am wenigsten Magnetpulver verbraucht und die höchste magnetische Flussdichte erreicht.

Wie insbesondere die Fig. 5 verdeutlicht, läuft der tangentiale magnetische Fluss 29 innerhalb der Ringräume 15 bzw. 24, wohingegen der radiale magnetische Fluss 30 durch den Ringspalt und den Spaltrohrtopf 12 hindurchtritt und dort entsprechend der Polanordnung eine sinusförmige Verteilung der Flussdichte B erzeugt, welcher für die Momentenübertragung besonders günstig ist.

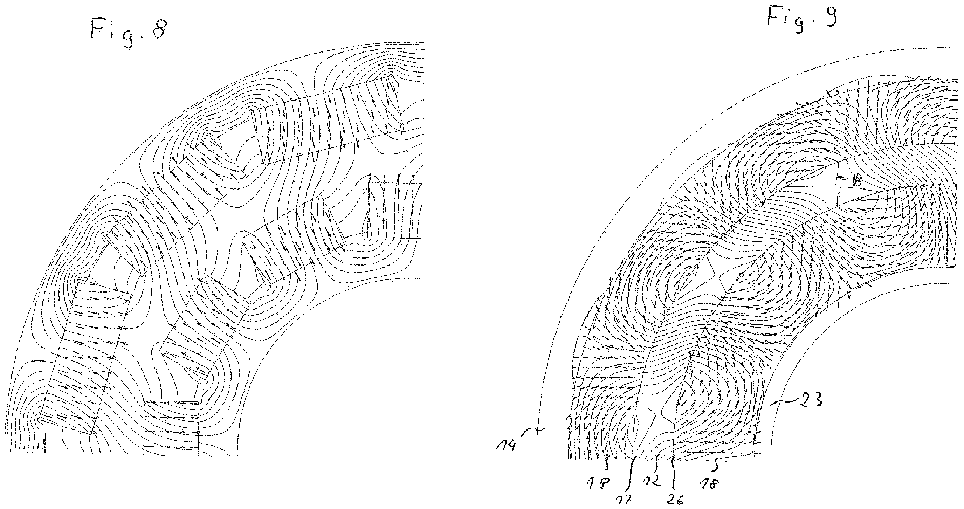

Anhand der Figuren 8 und 9, in denen die magnetische Ausrichtung sowie der Flusslinienverlauf bei der erfindungsgemäßen Magnetkupplung (Fig. 9) und beim Stand der Technik entsprechend EP 2 056 432 A1 (Fig. 8) dargestellt ist, wird deutlich, dass der magnetische Fluss nahezu ausschließlich innerhalb des magnetischen Materials 18, d. h. innerhalb der Ringräume 15 und 24 erfolgt, sodass auf ein "Backing" bzw. Joch wie beim Stand der Technik verzichtet werden kann, was die radiale Baugröße verringert.

### Bezugszeichenliste

- 1: Kreiselpumpe
- 2: Welle
- 3: Fuß
- 4: Mantel
- 5: Kreiselrad
- 6: Kopfteil
- 7: Motorstuhl
- 8: magnetische Kupplung
- 9: äußerer Rotor
- 10: Aufnahme für Motorwelle
- 11: innerer Rotor
- 12: Spaltrohrtopf
- 13: Saugraum
- 14: Außenwand
- 15: Ringraum des äußeren Rotors
- 16: Wand (Boden)
- 17: Innenwand
- 18: pulverförmiges magnetisierbares/magnetisiertes Material
- 19: Deckel
- 20: Drehteil
- 21: kragenförmiger Abschnitt
- 22: Kopf
- 23: Innenwand
- 24: Ringraum des inneren Rotors
- 25: Boden
- 26: Außenwand
- 27: Deckel
- 28: Längsmittel- und Drehachse
- 29: tangentialer magnetischer Fluss
- 30: radialer magnetischer Fluss
- B: Flussdichte
- Xₐ: Polabstand am Innenumfang des äußeren Rotors
- Xᵢ: Polabstand am Außenumfang des inneren Rotors
- Tₐ: radiale lichte Weite des Ringraums des äußeren Rotors, Dicke
- Tᵢ: radiale lichte Weite des Ringraums des inneren Rotors, Dicke

## Patentansprüche

1. Magnetische Kupplung mit einem inneren Rotor (11) und einem diesen zumindest teilweise umgebenden äußeren Rotor (9), die jeweils magnetisches Material (18) aufweisen und die durch magnetische Kräfte miteinander gekuppelt sind, wobei der innere Rotor (11) und/oder der äußere Rotor (9) pulverförmiges, magnetisierbares Material (18) beinhalten, welches von der Seite, welche dem anderen Rotor gegenüberliegt, an mehreren über den Umfang verteilten Stellen magnetisiert ist, und ein hermetisch abgeschlossenes Behältnis (15, 24) oder einen zumindest einseitig offenen Ringraum aufweist, in dem das magnetische Material (18) angeordnet ist, **dadurch gekennzeichnet, dass** zumindest das Behältnis (15) oder der Ringraum des äußeren Rotors (9) eine hohlzylindrische Form aufweist und dass das Verhältnis vom Abstand Xₐ benachbarter magnetischer Pole (S, N) am Innendurchmesser des äußeren Rotors (9) zur Dicke Tₐ des magnetischen Materials (18) im äußeren Rotor (9) zwischen 2 und 3 beträgt und/oder dass zumindest das Behältnis (24) oder der Ringraum des inneren Rotors (11) eine hohlzylindrische Form hat und dass das Verhältnis vom Abstand Xᵢ benachbarter magnetischer Pole (S, N) am Außendurchmesser des inneren Rotors (11) zur Dicke Tᵢ des magnetischen Materials (18) im inneren Rotor (11) zwischen 2 und 3 beträgt.

2. Magnetische Kupplung nach Anspruch 1, **dadurch gekennzeichnet, dass** die Magnetisierung derart ist, dass sich in gekuppeltem Zustand in Ebenen quer zur Längsmittel- und Rotationsachse (28) der Kupplung eine wellenlinienförmige, vorzugsweise sinusförmige Verteilung der magnetischen Flussdichte (B) zwischen den Rotoren (9, 11) einstellt.

3. Magnetische Kupplung nach Anspruch 1 oder 2, **dadurch gekennzeichnet, dass** die Magnetisierung über den Umfang des Rotors (9, 11) in gleichem Winkelabstand bezogen auf die gemeinsame Längsmittel- und Rotationsachse (28) der Kupplung verteilt ist.

4. Magnetische Kupplung nach einem der Ansprüche 1 bis 3, **dadurch gekennzeichnet, dass** das magnetische Material in dem Behältnis (15, 24) oder Ringraum in verdichteter Form angeordnet ist.

5. Magnetische Kupplung nach einem der Ansprüche 1 bis 4, **dadurch gekennzeichnet, dass** das pulverförmige magnetische Material im Ringraum eine schützende Beschichtung aufweist sowie mit einem Haftmittel versehen ist,

6. Magnetische Kupplung nach einem der vorhergehenden Ansprüche, **dadurch gekennzeichnet, dass** das Verhältnis von Abstand Xₐ, Xᵢ zur Dicke Tₐ, Tᵢ 2,2 bis 2,8, vorzugsweise 2,5 beträgt.

7. Magnetische Kupplung nach einem der vorhergehenden Ansprüche, **dadurch gekennzeichnet, dass** die Permeabilität der das magnetische Material umgebenden äußeren Wand (14) des äußeren Rotors (11) zwischen 1 und 2 beträgt.

8. Magnetische Kupplung nach einem der vorhergehenden Ansprüche 1 bis 7, **dadurch gekennzeichnet, dass** die magnetischen Pole (N, S) im inneren und im äußeren Rotor (9, 11) in Längsrichtung gesehen schräg, vorzugsweise unter Richtungswechsel schräg verlaufen, und zwar in einem Winkel zwischen 10° und 60°, vorzugsweise von 15°, bezogen auf eine Parallele zur Längsmittel- und Rotationsachse (28).

9. Magnetische Kupplung nach einem der vorhergehenden Ansprüche 1 bis 7, **dadurch gekennzeichnet, dass** die magnetischen Pole (N, S) im inneren und im äußeren Rotor (9, 11) in Längsrichtung gesehen kurvenförmig verlaufen.

10. Magnetische Kupplung nach einem der vorhergehenden Ansprüche, **dadurch gekennzeichnet, dass** das pulverförmige magnetisierbare Material (18) zu 0 bis 50 Vol-% aus weichmagnetischen Stoffen und zu 50 bis 100 Vol-% aus hartmagnetischen Stoffen besteht.

11. Magnetische Kupplung nach einem der vorhergehenden Ansprüche, **dadurch gekennzeichnet, dass** einer der Rotoren Permanentmagnete aufweist, die in einer Halbach-Array-Konfiguration angeordnet sind

12. Magnetische Kupplung nach einem der vorhergehenden Ansprüche, **dadurch gekennzeichnet, dass** das magnetische Material (18) im Rotor (9, 11) durch einen oder mehrere vorzugsweise ringförmige und aus pulverförmigen Material (18) vorgeformte Formkörper gebildet ist.

## Claims

1. A magnetic coupling with an inner rotor (11) and with an outer rotor (9) which at least partly surrounds this, said rotors each comprising magnetic material (18) and being coupled to one another by way of magnetic forces, wherein the inner rotor (11) and/or the outer rotor (9) contain powder-like, magnetisable material (18) which from the side lying opposite the other rotor, is magnetised at several locations distributed over the periphery, and comprising a hermetically closed receptacle (15, 24) or an annular space which is open at least at one side and in which the magnetic material is arranged, **characterised in that** at least the receptacle (15) or the annular space of the outer rotor (9) has a hollow-cylindrical shape and that the ratio of the distance Xₐ of adjacent magnetic poles (S, N) on the inner diameter of the outer rotor to the thickness Tₐ of the magnetic material (18) in the outer rotor (9) is between 2 and 3 and or that at least the receptacle or the annular space (24) of the inner rotor (11) has a hollow-cylindrical shape and that the ratio of the distance Xᵢ of adjacent magnetic poles (S, N) on the outer diameter of the inner rotor (11) to the thickness Tᵢ of the magnetic material (18) in the inner rotor (11) is between 2 and 3

2. A magnetic coupling according to claim 1, **characterised in that** the magnetisation is such that in the coupled condition, a wavy-line-like, preferably sinusoidal distribution of the magnetic flux density (B) sets in between the rotors (9, 11) in planes transverse to the longitudinal middle axis and rotation axis (28) of the coupling.

3. A magnetic coupling according to claim 1 or 2, **characterised in that** the magnetisation is distributed over the periphery of the rotor (9, 11) at the same angular distance with respect to the common longitudinal middle axis and rotation axis (28) of the coupling.

4. A magnetic coupling according to one of the claims 1 to 3, **characterised in that** the magnetic material in the receptacle (15, 24) or annular space is arranged in a compacted form.

5. A magnetic coupling according to one of the claims 1 to 4, **characterised in that** the powder-like, magnetic material comprises a protective coating as well as is provided with an adhesive.

6. A magnetic coupling according on of the preceding claims, **characterised in that** the ratio of the distance Xₐ, Xᵢ to the thickness Tₐ,Tᵢ is 2.2 to 2.8, preferably 2.5.

7. A magnetic coupling according to one of the preceding claims, **characterised in that** the permeability of the outer wall (14) of the outer rotor (11) which surrounds the magnetic material is between 1 and 2.

8. A magnetic coupling according to one of the preceding claims 1 to 7, **characterised in that** the magnetic poles (N, S) in the inner and in the outer rotor (9, 11) run obliquely seen in the longitudinal direction, preferably amid a direction change, and specifically at an angle of between 10° and 60°, preferably 15 °, with respect to a parallel to the longitudinal middle axis and rotation axis (28).

9. A magnetic coupling according to one of the preceding claims 1 to 7, **characterised in that** the magnetic poles (N, S) in the inner and in the outer rotor (9, 11) run in a curvilinear manner seen in the longitudinal direction.

10. A magnetic coupling according to one of the preceding claims, **characterised in that** the powder-like, magnetisable material (18) consists of 0 to 50 % by volume of soft-magnetic materials and of 50 to 100 % by volume of hard-magnetic materials.

11. A magnetic coupling according to one of the preceding claims, **characterised in that** one of the rotors comprises permanent magnets which are arranged in a Halbach-array configuration.

12. A magnetic coupling according to one of the preceding claims, **characterised in that** the magnetic material (18) in the rotor (9, 11) is formed by one or more preferably annular shaped bodies which are pre-shaped from powder-like material (18).

## Revendications

1. Couplage magnétique comportant un rotor intérieur (11) et un rotor extérieur (9) entourant celui-ci au moins en partie, qui présentent respectivement un matériau magnétique (18) et qui sont couplés l'un à l'autre par des forces magnétiques, dans lequel le rotor intérieur (11) et/ou le rotor extérieur (9) contiennent un matériau pulvérulent magnétisable (18), qui est magnétisé du côté qui est opposé à l'autre rotor à plusieurs endroits répartis sur la circonférence, et présente un récipient hermétiquement fermé (15, 24) ou un espace annulaire ouvert au moins d'un côté dans lequel le matériau magnétique (18) est disposé, **caractérisé en ce qu'**au moins le récipient (15) ou l'espace annulaire du rotor extérieur (9) présente une forme de cylindre creux et **en ce que** le rapport entre la distance Xₐ de pôles magnétiques adjacents (S, N) au niveau du diamètre intérieur du rotor extérieur (9) et l'épaisseur Tₐ du matériau magnétique (18) dans le rotor extérieur (9) est compris entre 2 et 3 et/ou **en ce qu'**au moins le récipient (24) ou l'espace annulaire du rotor intérieur (11) a une forme de cylindre creux et **en ce que** le rapport entre la distance Xᵢ de pôles magnétiques adjacents (S, N) au niveau du diamètre extérieur du rotor intérieur (11) et l'épaisseur Tᵢ du matériau magnétique (18) dans le rotor intérieur (11) est compris entre 2 et 3.

2. Couplage magnétique selon la revendication 1, **caractérisé en ce que** la magnétisation est telle qu'à l'état couplé dans des plans transversalement à l'axe longitudinal médian et de rotation (28) du couplage, il se règle une distribution en forme de ligne ondulée, de préférence sinusoïdale, de la densité de flux magnétique (B) entre les rotors (9, 11).

3. Couplage magnétique selon la revendication 1 ou 2, **caractérisé en ce que** la magnétisation est répartie sur la circonférence du rotor (9, 11) à une même distance angulaire par rapport à l'axe longitudinal médian et de rotation (28) commun du couplage.

4. Couplage magnétique selon l'une des revendications 1 à 3, **caractérisé en ce que** le matériau magnétique est disposé dans le récipient (15, 24) ou l'espace annulaire sous une forme comprimée.

5. Couplage magnétique selon l'une des revendications 1 à 4, **caractérisé en ce que** le matériau magnétique pulvérulent présente dans l'espace annulaire un revêtement protecteur et est doté d'un adhésif.

6. Couplage magnétique selon l'une des revendications précédentes, **caractérisé en ce que** le rapport entre la distance Xₐ, Xᵢ et l'épaisseur Tₐ, Tᵢ est de 2,2 à 2,8, de préférence égal à 2,5.

7. Couplage magnétique selon l'une des revendications précédentes, **caractérisé en ce que** la perméabilité de la paroi extérieure (14) du rotor extérieur (11) entourant le matériau magnétique est comprise entre 1 et 2.

8. Couplage magnétique selon l'une des revendications précédentes 1 à 7, **caractérisé en ce que** les pôles magnétiques (N, S) s'étendent obliquement dans le rotor intérieur et dans le rotor extérieur (9, 11) tel que vu dans le sens longitudinal, de préférence obliquement avec changement de direction, et ce selon un angle entre 10° et 60°, de préférence égal à 15°, par rapport à une parallèle à l'axe longitudinal médian et de rotation (28).

9. Couplage magnétique selon l'une des revendications précédentes 1 à 7, **caractérisé en ce que** les pôles magnétiques (N, S) s'étendent dans le rotor intérieur et dans le rotor extérieur (9, 11) en forme de courbe, tel que vu dans le sens longitudinal.

10. Couplage magnétique selon l'une des revendications précédentes, **caractérisé en ce que** le matériau magnétisable pulvérulent (18) se compose de 0 à 50 % en volume de substances magnétiques douces et de 50 à 100 % en volume de substances magnétiques dures.

11. Couplage magnétique selon l'une des revendications précédentes, **caractérisé en ce qu'**un des rotors présente des aimants permanents, qui sont agencés dans une configuration de réseau de Halbach.

12. Couplage magnétique selon l'une des revendications précédentes, **caractérisé en ce que** le matériau magnétique (18) dans le rotor (9, 11) est formé par un ou plusieurs corps moulés de préférence annulaires et de préférence préformés à partir d'un matériau pulvérulent (18).
